# FASCICULE DE BREVET EUROPEEN

(11) **EP 4 448 644 B1**
(45) Date de publication et mention de la délivrance du brevet: **18.02.2026**
(21) Numéro de dépôt: 22836126.7
(22) Date de dépôt: 13.12.2022
(51) Int. Cl.: C08L 9/00, C08K 3/04, C08L 23/08, C08L 23/10

(54) **COMPOSITION DE CAOUTCHOUC COMPRENANT UN ÉLASTOMÈRE DIÉNIQUE FORTEMENT SATURÉ**
KAUTSCHUKZUSAMMENSETZUNG ENTHALTEND EIN STARK GESÄTTIGTES DIEN ELASTOMER
RUBBER COMPOSITION CONTAINING A HIGHLY SATURATED DIENE ELASTOMER

(30) Priorité: 16.12.2021 FR 2113625
(43) Date de publication de la demande: 23.10.2024
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND CEDEX 09 (FR); GORNARD, Benjamin, 63040 CLERMONT-FERRAND CEDEX 09 (FR); LALLET, François, 63040 CLERMONT-FERRAND CEDEX 09 (FR)
(74) Mandataire: M.F.P. Michelin
(86) Numéro de dépôt international: PCT/EP2022/085690
(87) Numéro de publication internationale: WO 2023/110919

(56) Documents cités:
- FR-A1- 2 955 587
- FR-A1- 3 104 595
- FR-A1- 3 104 597
- FR-A1- 3 118 047

## Description

### DOMAINE TECHNIQUE

Le domaine de la présente invention est celui des compositions de caoutchouc à base d'élastomère diénique fortement saturé destinées à être utilisées dans un pneumatique, notamment dans sa bande de roulement.

### TECHNIQUE ANTERIEURE

L'utilisation d'élastomère diénique fortement saturé est connue dans l'art antérieur. Par exemple, la Demanderesse a décrit des copolymères d'éthylène et de 1,3-butadiène et leur application dans une bande de roulement d'un pneu dans le document WO2014114607A1. Ce document indique que l'utilisation de ces copolymères a pour effet de conférer de bonnes propriétés de résistance à l'usure et de résistance au roulement au pneumatique.

Dans le domaine des plastifiants et en particulier des résines plastifiantes, certains documents de la Demanderesse mentionnent l'utilisation de résines de faible Tg à titre de plastifiants dans des compositions de caoutchouc pour pneumatiques à base d'un élastomère de type SBR afin de décaler l'équilibre existant entre diverses performances recherchées pour le pneu, parmi lesquelles la résistance au roulement, l'adhésion sur sol sec, l'adhésion sur sol humide, et d'optimiser la dureté des compositions de caoutchouc cuites en même temps que leur viscosité à cru. On peut ainsi citer les documents WO2015/124684 A1 et WO2015/124681 A1.

Néanmoins, les manufacturiers cherchent toujours des solutions pour améliorer les performances des pneus ou décaler leur équilibre. Dans le domaine discuté plus haut des pneus comprenant un élastomère diénique fortement saturé en bande de roulement, il existe toujours un besoin de disposer de compositions de caoutchouc qui confèrent au pneu des propriétés de résistance au roulement améliorées sans pénaliser les autres propriétés telles que l'adhérence sur le sol.

### EXPOSE DE L'INVENTION

La Demanderesse a trouvé une composition de caoutchouc qui permet de répondre à ce besoin dans le domaine d'application des élastomères diéniques fortement saturés aux compositions de caoutchouc pour le pneu et en particulier pour la bande de roulement. Tout particulièrement, la Demanderesse a trouvé une composition de caoutchouc qui associe l'utilisation d'un élastomère diénique fortement saturé à l'utilisation d'une résine de faible Tg, et qui confère au pneu, contre toute attente, de bonnes propriétés de résistance au roulement et un compromis de propriétés résistance au roulement / adhérence sur un sol humide décalé, notamment avec des propriétés d'adhérence sur sol humide améliorées par rapport à l'utilisation combinée d'un élastomère diénique de type SBR à une résine de faible Tg.

Ainsi, un premier objet de l'invention est une composition de caoutchouc à base d'au moins
- une matrice élastomère comprenant majoritairement un élastomère diénique fortement saturé,
- une charge renforçante,
- un système de vulcanisation et
- un système plastifiant comprenant une résine de faible Tg.

Un autre objet de l'invention est un bandage pneumatique ou non-pneumatique qui comprend une composition de caoutchouc conforme à l'invention, de préférence dans sa bande de roulement.

### RESUME DE L'INVENTION

L'invention, décrite plus en détails ci-après, a pour objet au moins l'une des réalisations énumérées aux points suivants :
1. Composition de caoutchouc à base d'au moins
   - une matrice élastomère comprenant majoritairement un élastomère diénique fortement saturé, lequel élastomère diénique fortement saturé est un copolymère d'éthylène et d'au moins un 1,3-diène dans lequel les unités éthylène représentent au moins 50% en mole des unités monomères du copolymère,
   - une charge renforçante,
   - un système de vulcanisation et
   - un système plastifiant comprenant une résine hydrocarbonée de faible Tg (température de transition vitreuse), éventuellement hydrogénée, présentant une Tg comprise entre -40°C et 20°C et une masse molaire moyenne en nombre (Mn) inférieure à 800 g/mol.
2. Composition de caoutchouc selon la réalisation 1, dans laquelle les unités éthylène représentent entre 50% et 95% en mole des unités monomères du copolymère diénique fortement saturé.
3. Composition de caoutchouc selon l'une quelconque des réalisations précédentes, dans laquelle les unités éthylène représentent au moins 65% en mole des unités monomères du copolymère diénique fortement saturé, de préférence de 65% à 90% en mole des unités monomères du copolymère.
4. Composition de caoutchouc selon l'une quelconque des réalisations précédentes, dans laquelle le au moins un 1,3-diène est le 1,3-butadiène, l'isoprène, le myrcène ou le farnésène, de préférence le 1,3-butadiène.
5. Composition de caoutchouc selon l'une quelconque des réalisations précédentes, dans laquelle le copolymère d'éthylène et d'au moins un 1,3-diène est un copolymère d'éthylène et de 1,3-butadiène.
6. Composition de caoutchouc selon l'une quelconque des réalisations précédentes, dans laquelle le copolymère est statistique.
7. Composition de caoutchouc selon l'une quelconque des réalisations précédentes, dans laquelle le taux de l'élastomère diénique fortement saturé dans la composition de caoutchouc varie dans un domaine allant de 60 à 100 pce, de préférence de 80 à 100 pce et de manière très préférentielle de 90 à 100pce.
8. Composition selon l'une quelconque des réalisations précédentes dans laquelle le taux de résine hydrocarbonée de faible Tg est compris dans un domaine allant de 20 à 120 pce, de préférence de 40 à 110 pce.
9. Composition selon l'une quelconque des réalisations précédentes dans laquelle la résine hydrocarbonée de faible Tg est une résine majoritairement styrénique et fortement hydrogénée.
10. Composition selon l'une quelconque des réalisations précédentes dans laquelle la résine hydrocarbonée de faible Tg présente une Tg comprise entre -40°C et 0°C, plus préférentiellement entre -40°C et -20°C.
11. Composition selon l'une quelconque des réalisations précédentes dans laquelle la résine hydrocarbonée de faible Tg présente une Tg allant de -35°C à -25°C.
12. Composition selon l'une quelconque des réalisations précédentes dans laquelle la résine hydrocarbonée de faible Tg présente une masse molaire moyenne en nombre supérieure ou égale à 250 g/mol inférieure à 600 g/mol.
13. Composition selon l'une quelconque des réalisations précédentes dans laquelle la résine hydrocarbonée de faible Tg présente une valeur d'indice de polymolécularité (IP = Mw/Mn) d'au plus 1,60.
14. Composition selon l'une quelconque des réalisations précédentes dans laquelle la résine hydrocarbonée de faible Tg présente un taux de proton aliphatique mesuré par RMN (méthode normalisée) d'au moins 90%, de préférence d'au moins 95%.
15. Composition selon l'une quelconque des réalisations précédentes dans laquelle la résine hydrocarbonée de faible Tg présente un taux de proton aromatique inférieur 5%.
16. Composition selon la réalisation précédente dans laquelle la résine hydrocarbonée de faible Tg présente un taux de proton aromatique allant de 0% à 4%, de préférence de 0% à 2%.
17. Composition selon l'une quelconque des réalisations précédentes dans laquelle la résine hydrocarbonée de faible Tg présente un taux de proton éthylénique inférieur à 5%.
18. Composition selon l'une quelconque des réalisations précédentes dans laquelle la résine hydrocarbonée de faible Tg présente un taux de proton éthylénique inférieur ou égal à 3%.
19. Composition selon l'une quelconque des réalisations précédentes dans laquelle la résine hydrocarbonée de faible Tg présente un point de ramollissement compris dans un domaine allant de +10 à 70°C, préférentiellement de 10 à 40°C, plus préférentiellement de 10 à 30°C, de préférence de 15 à 25°C.
20. Composition selon l'une quelconque des réalisations précédentes dans laquelle le système plastifiant comprend en outre au moins une huile plastifiante ou au moins une résine hydrocarbonée de Tg supérieure à 20°C, ou encore au moins une huile plastifiante et une résine hydrocarbonée de Tg supérieure à 20°C.
21. Composition selon l'une quelconque des réalisations précédentes dans laquelle le taux total de plastifiants constituant le système plastifiant est supérieur ou égal à 25 pce, de préférence compris dans un domaine allant de 40 à 110 pce.
22. Composition selon la réalisation précédente dans laquelle le taux total de plastifiants constituant le système plastifiant est compris dans un domaine allant de 40 à 100 pce, de préférence de 40 à 90 pce.
23. Composition selon l'une quelconque des réalisations précédentes dans laquelle la charge renforçante comprend au moins une silice, un noir de carbone ou un mélange de silice et de noir de carbone.
24. Composition selon l'une quelconque des réalisations précédentes dans laquelle la charge renforçante comprend une silice à titre de charge renforçante majoritaire.
25. Composition selon l'une quelconque des réalisations précédentes dans laquelle le taux de charge renforçante est compris dans un domaine allant de 5 à 200 pce, de préférence de 40 à 160 pce.
26. Composition selon l'une quelconque des réalisations précédentes dans laquelle le taux de silice est compris dans un domaine allant de 50 à 160 pce.
27. Bandage pneumatique ou non-pneumatique comprenant une composition selon l'une quelconque des réalisations précédente.
28. Bandage pneumatique ou non-pneumatique selon la réalisation précédente comprenant une composition selon l'une quelconque des réalisations 1 à 26 dans tout ou partie de sa bande de roulement.

### DEFINITIONS

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, on entend par "l'ensemble des unités monomères de l'élastomère" ou "la totalité des unités monomères de l'élastomère" tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend une proportion massique de plus de 50% ; lorsque le composé représente 100% massique, il est également qualifié de « majoritaire ».

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indication différente, comme c'est le cas dans les exemples présentés plus bas, les valeurs de température de transition vitreuse (Tg) décrite dans la présente sont mesurées de manière connue par DSC (Differential Scanning Calorimetry) selon la norme ASTM D3418 (1999).

### DESCRIPTION DETAILLEE DE L'INVENTION

### 1 Matrice élastomère

Par « matrice élastomère », on entend l'ensemble des élastomères de la composition.

Selon l'invention, la matrice élastomère comprend majoritairement au moins un élastomère diénique fortement saturé, à savoir un copolymère contenant des unités éthylène et des unités diéniques (ci-après dénommé « le copolymère »).

L'élastomère diénique fortement saturé, utile aux besoins de l'invention est un copolymère, de préférence statistique, qui comprend des unités éthylène résultant de la polymérisation d'éthylène. De manière connue, l'expression « unité éthylène » fait référence au motif -(CH₂-CH₂)- résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère et au plus 95% en mole.

De préférence, l'élastomère diénique fortement saturé comprend au moins 65% molaire d'unité éthylène. Autrement dit, les unités éthylène représentent préférentiellement au moins 65% en mole de l'ensemble des unités monomères de l'élastomère diénique fortement saturé. De manière plus préférentielle, l'élastomère diénique fortement saturé comprend de 65% à 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'au moins un 1,3-diène comprend aussi des unités 1,3-diène résultant de la polymérisation d'au moins un 1,3-diène. De manière connue, l'expression « unité 1,3-diène » fait référence aux unités résultant de l'insertion du 1,3-diène.

Les unités 1,3-diène sont celles par exemple d'un 1,3-diène ayant 4 à 24 atomes de carbone.

A titre de 1,3-diène convient notamment le butadiène, l'isoprène, les 2,3-di(alkyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène ou le 2-méthyl-3-isopropyl-1,3-butadiène, les aryl-1,3-butadiène tels que le phényl-1,3-butadiène, le 1,3-pentadiène. A titre de 1,3-diène convient également un 1,3-diène de formule CH₂=CR-CH=CH₂, dans laquelle R représente une chaîne hydrocarbonée ayant 3 à 20 atomes de carbone, tel que par exemple un monoterpène (C₁₀H₁₆) linéaire, comme le myrcène, un sesquiterpène (C₁₅H₂₄) linéaire, comme le farnésène etc....

L'élastomère diénique fortement saturé est de préférence un copolymère d'éthylène et d'au moins un 1,3-diène parmi 1,3-butadiène, l'isoprène, le myrcène et le farnésène.

De préférence, le au moins un 1,3-diène est le 1,3-butadiène ou l'isoprène, plus préférentiellement le 1,3-butadiène, auquel cas l'élastomère diénique fortement saturé est un copolymère d'éthylène et de 1,3-butadiène, de préférence statistique.

L'élastomère diénique fortement saturé utile aux besoins de l'invention, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224, ainsi que WO2020070442, WO2020070443 et WO2020074804 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. L'élastomère diénique fortement saturé est statistique selon un mode de réalisation de l'invention.

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Selon l'invention, le taux de l'élastomère diénique fortement saturé dans la composition de caoutchouc est de préférence d'au moins 50 parties en poids pour cent parties d'élastomère de la composition de caoutchouc (pce). De préférence encore, le taux de l'élastomère diénique fortement saturé dans la composition de caoutchouc varie dans un domaine allant de 60 à 100 pce, préférentiellement 80 à 100 pce. De manière plus préférentielle, il varie dans un domaine allant de 90 à 100 pce.

A titre complémentaire, la matrice élastomère de la composition de l'invention peut comprendre au moins un autre élastomère, à titre minoritaire. Notons en particulier les élastomères diéniques connus de l'homme du métier pour leur utilisation dans le domaine des pneumatiques, tels qu'un polybutadiène (en abrégé "BR"), un polyisoprène (IR) de synthèse, du caoutchouc naturel (NR), un copolymère de butadiène comme un copolymère de butadiène-styrène (SBR), un copolymère d'isoprène et les mélanges de ces élastomères.

### 2 Plastifiant spécifique

### Résine de faible Tg

La composition de l'invention comprend au moins une résine hydrocarbonée présentant une Tg comprise dans un domaine allant de -40 °C à 20°C, c'est-à-dire visqueuse à 20 °C, dite à "faible Tg" et une masse molaire moyenne en nombre (Mn) inférieure ou égale à 800 g/mol.

De préférence, la résine plastifiante hydrocarbonée de faible Tg présente au moins une quelconque des caractéristiques suivantes :
- une Tg comprise entre -40°C et 0°C, plus préférentiellement entre -40°C et -20°C, et plus préférentiellement encore entre -35°C et -25°C;
- une masse molaire moyenne en nombre (Mn) supérieure ou égale à 150 g/mol, de préférence supérieure ou égale à 250 g/mol et inférieure ou égale à 600 g/mol, plus préférentiellement supérieure ou égale à 250 g/mol et inférieure ou égale à 500 g/mol ;
- une valeur d'indice de polydispersité (IP = Mw/Mn) d'au plus 1,6, préférentiellement d'au plus 1,4.

De préférence également, la résine plastifiante hydrocarbonée de faible Tg présente un point de ramollissement compris dans un domaine allant de 10 à 70°C, préférentiellement de 10 à 40°C, plus préférentiellement de 10 à 30°C, de préférence de 15 à 25°C;
Plus préférentiellement, cette résine plastifiante hydrocarbonée de faible Tg présente l'ensemble des caractéristiques préférentielles ci-dessus.

Le point de ramollissement est mesuré selon la norme ISO 4625 (méthode "Ring and Bail"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µηη avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées selon l'invention peuvent être aliphatiques, ou aromatiques ou encore du type mixte aliphatique/ aromatique, c'est-à-dire que les résines hydrocarbonées selon l'invention comprennent des unités constitutionnelles aliphatiques, des unités constitutionnelles aromatiques, ou encore des unités constitutionnelles aliphatiques et des unités constitutionnelles aromatiques. Elles peuvent être naturelles ou synthétiques, à base ou non de pétrole (si tel est le cas, connues aussi sous le nom de résines de pétrole).

Les résines hydrocarbonées selon l'invention peuvent être issues de la polymérisation d'un ou plusieurs monomères parmi les monomères aromatiques et les monomères aliphatiques. Les résines hydrocarbonées peuvent avoir subi une hydrogénation partielle ou totale à l'issue de la polymérisation.

Selon un mode de réalisation, la résine plastifiante hydrocarbonée de faible Tg selon l'invention est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C₅, les résines d'homopolymères ou copolymères du styrène, les résines d'homopolymères ou copolymères de coupe C₉ (ou plus généralement d'une coupe C₈ à C₁₀), et les mélanges de ces résines. Le terme "terpène" regroupe ici de manière connue les monomères alpha-pinène, beta- pinène et limonène.

Selon un mode de réalisation préférentiel, la résine hydrocarbonée utile aux besoins de l'invention est une résine hydrocarbonée à base d'un ou plusieurs monomères aromatiques. A titre de monomères aromatiques conviennent par exemple le styrène, l'alpha- méthylstyrène, l'ortho-, méta-, para-méthylstyrène, le vinyle-toluène, le para- tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). Selon ce mode de réalisation, la résine hydrocarbonée peut être partiellement ou totalement hydrogénée, formant une résine hydrocarbonée aliphatique/aromatique ou aliphatique.

Selon un mode de réalisation encore plus préférentiel, la résine hydrocarbonée utile aux besoins de l'invention est une résine majoritairement à base de styrène et hydrogénée. Une telle résine est par exemple une résine hydrogénée à base de styrène, à titre de monomère majoritaire, et de vinyle-toluène.

Selon un mode de réalisation de l'invention, la résine hydrocarbonée de faible Tg présente un taux de proton aliphatique d'au moins 90%, de préférence d'au moins 95%.

Selon un mode de réalisation préférentiel, la résine hydrocarbonée utile aux besoins de l'invention présente un taux de proton aromatique inférieur à 5%, de préférence compris dans un domaine allant de 0% à 4%, de préférence de 0% à 2%.

Selon un mode de réalisation préférentiel, la résine hydrocarbonée utile aux besoins de l'invention présente un taux de proton éthylénique inférieur à 5%, de préférence compris dans un domaine allant de 0% à 3%.

Le taux de proton aromatique (%HA) et le taux de proton éthylénique (%HE) sont mesurés par RMN ¹ H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl₃) à raison d'environ 10mg de résine dans environ 1 mL de solvant. Les spectres sont acquis sur un spectromètre Avance 500 MHz Bruker équipé d'une sonde "large bande" BBO z- grad 5 mm Bruker. L'expérience RMN ¹ H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; δppm ¹ H à 7,20 ppm. Les signaux RMN ¹ H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

Des résines utilisables dans le cadre de l'invention sont disponibles commercialement, par exemple vendues par la société CRAY VALLEY sous la dénomination« Wingtack 10» (résine aliphatique de Mn=483 g/mol ; Mw=595 g/mol ; lp=1.2 ; point de ramollissement 10°C; Tg=-28°C), ou par la société Eastman sous la dénomination « Regalrez 1018» (résine aliphatique de Mn=360 g/mol ; Mw=464 g/mol ; lp=1.3 ; point de ramollissement 20 °C; Tg=-23°C),

Le taux de résine plastifiante hydrocarbonée de faible Tg est supérieur ou égal à 20 pce, de préférence compris dans un domaine allant de 20 pce à 120 pce, préférentiellement de 40 pce à 110 pce, encore de 45 à 90 pce. En effet, en dessous de 20 pce de résine de faible Tg, la composition pourrait présenter des problèmes de haute viscosité et donc de processabilité industrielle.

La résine plastifiante hydrocarbonée de faible Tg peut être un mélange de plusieurs résines plastifiantes hydrocarbonées de faible Tg telles que décrites plus haut.

Le système plastifiant selon l'invention peut comprendre outre la résine plastifiante hydrocarbonée de faible Tg, au moins une huile plastifiante ou au moins une résine hydrocarbonée de Tg supérieure à 20°C, ou encore au moins une huile plastifiante et une résine hydrocarbonée de Tg supérieure à 20°C. Ces plastifiants sont bien connus de l'homme du métier et disponibles commercialement.

Le taux total de plastifiants (résine plastifiante hydrocarbonée de faible Tg, huile plastifiante, résine hydrocarbonée de Tg supérieure à 20°C) constituant le système plastifiant est supérieur ou égal à 25 pce, de préférence compris dans un domaine allant de 40 à 110 pce. Selon certains modes le taux total de plastifiants constituant le système plastifiant est compris dans un domaine allant de 40 à 100 pce, de préférence compris dans un domaine allant de 40 à 90 pce.

### 3 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge. Plus particulièrement, la charge renforçante comprend au moins une silice, un noir de carbone ou un mélange de silice et de noir de carbone.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil 7000" et "Ultrasil 7005" de la société Degussa, les silices "Zeosil" 1165MP, 1135MP et 1115MP de la société Solvay, la silice "Hi-Sil EZ150G" de la société PPG, les silices "Zeopol" 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La composition selon l'invention peut optionnellement également contenir des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité de la composition, d'améliorer sa faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables. On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Dans la composition de caoutchouc conforme à l'invention, la teneur en agent de couplage est préférentiellement comprise entre 1 et 15 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge renforçante totale (noir de carbone et/ou charge inorganique renforçante telle que silice) est de 5 à 200 pce, plus préférentiellement de 40 à 160 pce. En dessous de 5 pce de charge, la composition pourrait ne pas être suffisamment renforcée tandis qu'au-dessus de 200 pce de charge, la composition pourrait être moins performante en résistance au roulement.

De préférence, on utilise la silice comme charge majoritaire, de préférence, selon un taux allant de 50 à 160 pce, plus préférentiellement de 60 à 150 pce ; et optionnellement du noir de carbone. Le noir de carbone, lorsqu'il est présent, est alors utilisé de manière minoritaire, de préférence à un taux compris dans un domaine allant de 0,1 à 10 pce, plus préférentiellement de 0,5 à 10 pce, notamment de 1 à 5 pce.

### 4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,2 pce et 10 pce, plus préférentiellement entre 0,3 et 5 pce. L'accélérateur ou le mélange d'accélérateurs de vulcanisation est utilisé à un taux préférentiel compris entre 0,5 et 10 pce, plus préférentiellement compris entre 0,5 et 5 pce.

On peut utiliser comme accélérateur, tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### 5 Additifs possibles

La composition de caoutchouc selon l'invention peut comporter optionnellement également tout ou partie des additifs usuels habituellement utilisés dans les compositions d'élastomères pour pneumatique, des pigments, des agents de protection tels que cires anti-ozone, anti-ozonants chimiques, anti-oxydants, des agents anti-fatigue, des résines renforçantes (telles que décrites par exemple dans la demande WO 02/10269).

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### 6 Préparation de la composition de caoutchouc

La composition conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases sont amplement connues de l'homme du métier.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

### 7 Pneumatique

La présente invention a également pour objet un bandage pneumatique ou non-pneumatique comprenant une composition de caoutchouc selon l'invention.

De préférence, la composition selon l'invention est présente au moins dans la bande de roulement du bandage pneumatique ou non-pneumatique selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION DE L'INVENTION

### 1- Tests et mesures :

### 1-1 Détermination de la microstructure des élastomères :

La microstructure des élastomères est déterminée par analyse RMN ¹H, suppléée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl₃). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl₃). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Pour la RMN du carbone est utilisée une séquence simple impulsion 30° avec un découplage du proton uniquement pendant l'acquisition pour éviter les effets "Overhauser Nucléaire" (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

### 1-2 Mesure des propriétés dynamiques :

### Propriétés dynamiques

Les propriétés dynamiques G* et tan(δ)max sont mesurées sur un viscoanalyseur (Metravib V A4000), selon la norme ASTM D5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz. On effectue un balayage en température de -80°C à +100°C avec une rampe de +1.5°C/min, sous une contrainte maximale de 0,7 MPa. La valeur de la tangente de l'angle de perte (tan(δ)) à 0°C est ensuite relevée.

Les résultats qui suivent sont issus de mesures mettant en œuvre des balayages en température sous une contrainte donnée et des balayages en déformation et ce, à une fréquence de sollicitation de 10Hz.

L'hystérèse en déformation est déterminée en prenant la valeur maximale de l'angle de perte sur un balayage retour à partir d'un balayage en déformation à 40°C allant de 0.01% à 100% de déformation crête-crête. Cette mesure est un descripteur de l'hystérèse et donc une indication de la propriété de résistance au roulement du pneu. La valeur en base 100 est calculée selon l'opération : (valeur de tan(δ) à 40°C du témoin / valeur de tan(δ) à 40°C de l'échantillon) * 100. De cette façon, une valeur plus basse représente une diminution de la performance en hystérèse (c'est-à-dire une augmentation de l'hystérèse) tandis qu'une valeur plus élevée représente une meilleure performance en hystérèse (c'est-à-dire une hystérèse plus faible).

De la même manière, l'hystérèse à 0°C est déterminée sur un balayage en température tel que défini plus haut. Cette mesure est un descripteur de l'hystérèse à basse température et donc une indication de la propriété d'adhérence sur sol mouillé. La valeur en base 100 est calculée selon l'opération : (valeur de tan(δ) à 0°C de l'échantillon / valeur de tan(δ) à 0°C du témoin) * 100. De cette façon, une valeur plus basse représente une diminution de la performance en hystérèse (c'est-à-dire une diminution de l'adhérence sur sol mouillé) tandis qu'une valeur plus élevée représente une meilleure performance en hystérèse (c'est-à-dire une meilleure performance en adhérence mouillée).

### 2- Préparation des compositions de caoutchouc :

Les compositions de caoutchouc dont le détail de la formulation figure dans le tableau 1, ont été préparées de la manière suivante :
On introduit l'élastomère dans un mélangeur interne (taux de remplissage final : environ 70% en volume), dont la température initiale de cuve est d'environ 90°C. Lorsque la température atteint 100°C, on introduit la moitié de la silice et de la résine, ainsi que le noir de carbone et l'agent de couplage. L'autre moitié de la silice et de la résine, l'huile ainsi que les divers autres ingrédients à l'exception du soufre et des accélérateurs de vulcanisation, sont introduites à 120°C. On conduit alors un travail thermomécanique (phase non-productive) en une étape, qui dure au total environ 3 à 4 min, jusqu'à atteindre une température maximale de « tombée » de 160°C. On récupère le mélange ainsi obtenu, on le refroidit puis on incorpore le soufre et les accélérateurs de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

### 3- Préparation de l'élastomère

L'élastomère (EBR) est préparé selon le mode opératoire suivant :
Dans un réacteur contenant du méthylcyclohexane, on ajoute le co-catalyseur, le butyloctylmagnésium (BOMAG) (0,00021 mol/L), puis le métallocène [{Me₂SiFlu₂Nd(µ-BH₄)₂Li(THF)}₂] (0,07 mol/L), le symbole Flu représentant le groupe C₁₃H₈. La durée d'alkylation est de 10 minutes, la température de réaction est de 20 °C. Ensuite, les monomères sous la forme d'un mélange gazeux de composition molaire éthylène/1,3-butadiène : 80/20 sont ajoutés de manière continue. La polymérisation est conduite dans des conditions de température et de pression constante 80°C et 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

**Tableau 1:**

| **Composants** | **C1** | **C2** | **C3** | **C4** | **C5** | **C6** | **C7** |
|---|---|---|---|---|---|---|---|
| EBR (1a) | 100.0 | 100.0 | 100.0 | 100.0 | | | |
| SBR (1b) | | | | | 100.0 | 100.0 | 100.0 |
| Noir (2) | 3.0 | 3.0 | 3.0 | 3.0 | 3.0 | 3.0 | 3.0 |
| Silice (3) | 85.9 | 85.9 | 85.9 | 85.9 | 85.9 | 85.9 | 85.9 |
| Silane liquide (4) | 6.9 | 6.9 | 6.9 | 6.9 | 6.9 | 6.9 | 6.9 |
| DPG (5) | 1.7 | 1.7 | 1.7 | 1.7 | 1.7 | 1.7 | 1.7 |
| Résine | | | | 72.4 | 72.4 | | |
| Résine 1 (8) | 72.4 | | | | | 72.4 | |
| Résine 2 (9) | | 72.4 | | | | | 72.4 |
| Résine 3 (10) | | | 72.4 | | | | |
| Cire ozone (11) | 2.0 | 2.0 | 2.0 | 2.0 | 2.0 | 2.0 | 2.0 |
| 6PPD (12) | 2.0 | 2.0 | 2.0 | 2.0 | 2.0 | 2.0 | 2.0 |
| SAD (13) | 2.0 | 2.0 | 2.0 | 2.0 | 2.0 | 2.0 | 2.0 |
| ZnO (14) | 0.9 | 0.9 | 0.9 | 0.9 | 0.9 | 0.9 | 0.9 |
| CBS (15) | 2.0 | 2.0 | 2.0 | 2.0 | 2.0 | 2.0 | 2.0 |
| Soufre (16) | 1.0 | 1.0 | 1.0 | 1.0 | 1.0 | 1.0 | 1.0 |

| | | | | | | | |
|---|---|---|---|---|---|---|---|
| *1. Élastomère* *a. EBR de Mooney ML (1+4) à 100°C = 80 avec un taux d'éthylène de 80% molaire de Tg -41°C* *b. SBR 27% poids styrène, 24%mol par rapport à la partie diénique de motifs 1,2-butadiène, portant une fonction Si-OH en extrémité de chaîne de Tg=-48°C* *2. Noir ASTM N234 de la société CABOT* *3. Silice 160MP de la société Solvay* *4. Silane liquide Si69* *5. Diphénylguanidine* *6. Huile MES* *7. Résine Escorez 5000 series de la société Exxon Mobil (Tg* = *52°C)* *8. Résine Wingtack 10* *9. Résine Regalrez 1018* *10. Résine Piccotac 1020-E* *11. Cire ozone C32ST (WAX7132)* *12. Santoflex 6PPD de la société FLEXSYS* *13. Acide stéarique* *14. Oxyde de Zinc* *15. Accélérateur cylohexyl-benzothiazyle sulfénamide CBS de la société AKROCHEM* *16. Soufre soluble* | | | | | | | |

Les caractéristiques des résines, ingrédients 8 à 10 sont exposées dans le tableau 2.

**Tableau 2**

| **Résine** | **Fournisseur** | **Nom commercial** | **Tg (°C)** | **Arom.** | **Ethyl.** | **Aliph.** | **Mn** | **Mw** | **Ip** |
|---|---|---|---|---|---|---|---|---|---|
| 1 | Cray Valley | Wingtack 10 | **-28** | <0.1% | 3% | 97% | 483 | 595 | 1,23 |
| 2 | Eastman | REGALREZ 1018 | **-23** | 2% | 0% | 98% | 364 | 460 | 1,26 |
| 3 | Eastman | Piccotac 1020-E | **-30** | <0.1% | 2% | 98% | 943 | 1632 | 1,76 |

### 4- Résultats :

Les résultats figurent dans le tableau 3.

**Tableau 3**

| | **C1 (invention)** | **C2 (invention)** | **C3 (témoin)** | **C4 (témoin)** | **C5 (témoin)** | **C6 (témoin)** | **C7 (témoin)** |
|---|---|---|---|---|---|---|---|
| **Récapitulatif des composants élastomères et résines** | | | | | | | |
| EBR (1a) | 100.0 | 100.0 | 100.0 | 100.0 | | | |
| SBR (1b) | | | | | 100.0 | 100.0 | 100.0 |
| Résine (7) | | | | 72.4 | 72.4 | | |
| Résine 1 (8) | 72.4 | | | | | 72.4 | |
| Résine 2 (9) | | 72.4 | | | | | 72.4 |
| Résine 3 (10) | | | 72.4 | | | | |

| **Résultats** | | | | | | | |
|---|---|---|---|---|---|---|---|
| Base 100 tan(δ) à 40°C | 139 | 144 | 118 | 100 | 100 | 140 | 147 |
| Base 100 tan(δ) à 0°C | 64 | 76 | 70 | 100 | 100 | 41 | 52 |

Les résultats montrent que la composition conforme à l'invention permet contre toute attente de fortement améliorer la performance d'hystérèse (résistance au roulement) sans trop dégrader l'adhérence sur sol mouillé lorsque la matrice élastomère est à base d'un EBR (comparaison de C4 par rapport à C1 et C2). La performance d'adhérence sur sol mouillé est davantage dégradée pour les compositions dont la matrice élastomère est à base de SBR (comparaison de C5 par rapport à C6 et C7, ainsi que C1 et C2 versus C4 par rapport à respectivement C6 et C7 versus C5) pour le SBR de tg = -48°C.

Les résultats montrent également que lorsque la résine de faible Tg ne présente pas l'ensemble des caractéristiques requises notamment en termes de Mn (Résine 3), lorsque la matrice élastomère est à base d'un EBR, l'amélioration en performance d'hystérèse est moindre et le compromis adhérence sur sol mouillé / hystérèse est dégradé par rapport une composition comprenant une résine de faible Tg conforme à l'invention et une matrice élastomère à base d'un EBR (comparaison de C3 par rapport à C1 et C2).

## Revendications

1. Composition de caoutchouc à base d'au moins
- une matrice élastomère comprenant majoritairement un élastomère diénique fortement saturé, lequel élastomère diénique fortement saturé est un copolymère d'éthylène et d'au moins un 1,3-diène dans lequel les unités éthylène représentent au moins 50% en mole des unités monomères du copolymère,
- une charge renforçante,
- un système de vulcanisation et
- un système plastifiant comprenant une résine hydrocarbonée de faible Tg (température de transition vitreuse), éventuellement hydrogénée, présentant une Tg comprise entre -40°C et 20°C et une masse molaire moyenne en nombre (Mn) inférieure ou égale à 800 g/mol, la Tg étant mesurée par DSC (Differential Scanning Calorimetry) selon la norme ASTM D3418 (1999).

2. Composition de caoutchouc selon la revendication 1, dans laquelle les unités éthylène représentent au moins 50% et au plus 95% en mole des unités monomères de l'élastomère diénique fortement saturé.

3. Composition de caoutchouc selon l'une quelconque des revendications précédentes, dans laquelle le au moins 1,3-diène est le 1,3-butadiène, l'isoprène, le myrcène ou le farnésène, de préférence le 1,3-butadiène.

4. Composition de caoutchouc selon l'une quelconque des revendications précédentes, dans laquelle le copolymère d'éthylène et d'au moins un 1,3-diène est un copolymère d'éthylène et de 1,3-butadiène.

5. Composition de caoutchouc selon l'une quelconque des revendications précédentes, dans laquelle le taux de l'élastomère diénique fortement saturé varie dans un domaine allant de 60 à 100 pce, de préférence de 80 à 100 pce, de manière très préférentielle de 90 à 100 pce.

6. Composition selon l'une quelconque des revendications précédentes dans laquelle le taux de la résine hydrocarbonée de faible Tg est compris dans un domaine allant de 20 à 120 pce, de préférence de 40 à 110 pce.

7. Composition selon l'une quelconque des revendications précédentes dans laquelle la résine hydrocarbonée de faible Tg présente une Tg comprise entre -40°C et 0°C, plus préférentiellement entre -40°C et -20°C.

8. Composition selon l'une quelconque des revendications précédentes dans laquelle la résine hydrocarbonée de faible Tg présente une masse molaire moyenne en nombre supérieure ou égale à 250 g/mol et inférieure à 600 g/mol.

9. Composition selon l'une quelconque des revendications précédentes dans laquelle la résine hydrocarbonée de faible Tg présente une valeur d'indice de polymolécularité (IP = Mw/Mn) d'au plus 1,60, de préférence d'au plus 1,40.

10. Composition selon l'une quelconque des revendications précédentes dans laquelle la résine hydrocarbonée de faible Tg présente un taux de proton aliphatique mesuré par RMN (méthode normalisée) d'au moins 90%, de préférence d'au moins 95%.

11. Composition selon l'une quelconque des revendications précédentes dans laquelle la résine hydrocarbonée de faible Tg présente un taux de proton aromatique inférieur 5%.

12. Composition selon l'une quelconque des revendications précédentes dans laquelle la résine hydrocarbonée de faible Tg est une résine majoritairement styrénique et hydrogénée.

13. Composition selon l'une quelconque des revendications précédentes dans laquelle la charge renforçante comprend une silice à titre de charge renforçante majoritaire.

14. Composition selon l'une quelconque des revendications précédentes dans laquelle le taux de silice est compris dans un domaine allant de 50 à 160 pce.

15. Bandage pneumatique ou non-pneumatique comprenant une composition selon l'une quelconque des revendications précédentes.

## Patentansprüche

1. Kautschukzusammensetzung auf Grundlage von zumindest:
- einer Elastomermatrix, die überwiegend ein hochgradig gesättigtes Dien-Elastomer umfasst, wobei es sich bei dem hochgradig gesättigten Dien-Elastomer um ein Copolymer aus Ethylen und mindestens einem 1,3-Dien handelt, wobei die Ethylen-Einheiten mindestens 50 Mol-% der Monomereinheiten des Copolymers ausmachen,
- einem verstärkenden Füllstoff,
- einem Vulkanisationssystem, und
- einem Weichmachersystem, das ein möglicherweise hydriertes kohlenwasserstoffartiges Harz mit niedriger Tg (Glasübergangstemperatur) umfasst, welches eine Tg zwischen -40 °C und 20 °C und ein Zahlenmittel des Molekulargewichts (Mn) von höchstens 800 g/mol aufweist, wobei die Tg mittels DSC (Dynamische Differenzkalorimetrie) gemäß der Norm ASTM D3418 (1999) gemessen wird.

2. Kautschukzusammensetzung gemäß Anspruch 1, wobei die Ethylen-Einheiten mindestens 50 Mol-% und höchstens 95 Mol-% der Monomereinheiten des hochgradig gesättigten Dien-Elastomers ausmachen.

3. Kautschukzusammensetzung gemäß einem beliebigen der vorhergehenden Ansprüche, wobei es sich bei dem mindestens einen 1,3-Dien um 1,3-Butadien, Isopren, Myrcen oder Farnesen, vorzugsweise um 1,3-Butadien, handelt.

4. Kautschukzusammensetzung gemäß einem beliebigen der vorhergehenden Ansprüche, wobei es sich bei dem Copolymer aus Ethylen und mindestens einem 1,3-Dien um ein Copolymer aus Ethylen und 1,3-Butadien handelt.

5. Kautschukzusammensetzung gemäß einem beliebigen der vorhergehenden Ansprüche, wobei der Gehalt an hochgradig gesättigtem Dien-Elastomer in einem Bereich von 60 bis 100 phe, vorzugsweise von 80 bis 100 phe, sehr stark bevorzugt von 90 bis 100 phe, variiert.

6. Zusammensetzung gemäß einem beliebigen der vorhergehenden Ansprüche, wobei der Gehalt an dem kohlenwasserstoffartigen Harz mit niedriger Tg in einem Bereich von 20 bis 120 phe, vorzugsweise von 40 bis 110 phe, liegt.

7. Zusammensetzung gemäß einem beliebigen der vorhergehenden Ansprüche, wobei das kohlenwasserstoffartige Harz mit niedriger Tg eine Tg zwischen -40 °C und 0 °C, stärker bevorzugt zwischen -40 °C und -20 °C, hat.

8. Zusammensetzung gemäß einem beliebigen der vorhergehenden Ansprüche, wobei das kohlenwasserstoffartige Harz mit niedriger Tg ein Zahlenmittel des Molekulargewichts von mindestens 250 g/mol und weniger als 600 g/mol hat.

9. Zusammensetzung gemäß einem beliebigen der vorhergehenden Ansprüche, wobei das kohlenwasserstoffartige Harz mit niedriger Tg einen Polydispersitätsindex (D = Mw/Mn) von höchstens 1,60, vorzugsweise von höchstens 1,40 aufweist.

10. Zusammensetzung gemäß einem beliebigen der vorhergehenden Ansprüche, wobei das kohlenwasserstoffartige Harz mit niedriger Tg einen Gehalt an aliphatischen Protonen, gemessen mittels NMR (Standardmethode), von mindestens 90 %, vorzugsweise von mindestens 95 %, aufweist.

11. Zusammensetzung gemäß einem beliebigen der vorhergehenden Ansprüche, wobei das kohlenwasserstoffartige Harz mit niedriger Tg einen Gehalt an aromatischen Protonen von weniger als 5 % aufweist.

12. Zusammensetzung gemäß einem beliebigen der vorhergehenden Ansprüche, wobei es sich bei dem kohlenwasserstoffartigen Harz mit niedriger Tg um ein überwiegend styrolartiges und hydriertes Harz handelt.

13. Zusammensetzung gemäß einem beliebigen der vorhergehenden Ansprüche, wobei der verstärkende Füllstoff als überwiegenden verstärkenden Füllstoff ein Siliciumdioxid umfasst.

14. Zusammensetzung gemäß einem beliebigen der vorhergehenden Ansprüche, wobei der Gehalt an Siliciumdioxid in einem Bereich von 50 bis 160 phe liegt.

15. Luftreifen oder nicht-pneumatischer Reifen, der eine Zusammensetzung gemäß einem beliebigen der vorhergehenden Ansprüche umfasst.

## Claims

1. Rubber composition based on at least:
- an elastomer matrix predominantly comprising a highly saturated diene elastomer, which highly saturated diene elastomer is a copolymer of ethylene and at least one 1,3-diene in which the ethylene units represent at least 50 mol% of the monomer units of the copolymer,
- a reinforcing filler,
- a vulcanization system, and
- a plasticizing system comprising a low-Tg (glass transition temperature) hydrocarbon resin, which is optionally hydrogenated, having a Tg of between -40°C and 20°C and a number-average molar mass (Mn) of less than or equal to 800 g/mol, Tg being measured by DSC (Differential Scanning Calorimetry) according to ASTM D3418 (1999).

2. Rubber composition according to Claim 1, in which the ethylene units represent at least 50 mol% and at most 95 mol% of the monomer units of the highly saturated diene elastomer.

3. Rubber composition according to either one of the preceding claims, in which the at least one 1,3-diene is 1,3-butadiene, isoprene, myrcene or farnesene, preferably 1,3-butadiene.

4. Rubber composition according to any one of the preceding claims, in which the copolymer of ethylene and at least one 1,3-diene is a copolymer of ethylene and 1,3-butadiene.

5. Rubber composition according to any one of the preceding claims, in which the content of highly saturated diene elastomer varies within a range extending from 60 to 100 phr, preferably from 80 to 100 phr and very preferentially from 90 to 100 phr.

6. Composition according to any one of the preceding claims, in which the content of low-Tg hydrocarbon resin is within a range extending from 20 to 120 phr, preferably from 40 to 110 phr.

7. Composition according to any one of the preceding claims, in which the low-Tg hydrocarbon resin has a Tg of between -40°C and 0°C, more preferentially between - 40°C and -20°C.

8. Composition according to any one of the preceding claims, in which the low-Tg hydrocarbon resin has a number-average molar mass of greater than or equal to 250 g/mol and less than 600 g/mol.

9. Composition according to any one of the preceding claims, in which the low-Tg hydrocarbon resin has a value of the polydispersity index (PDI = Mw/Mn) of at most 1.60, preferably of at most 1.40.

10. Composition according to any one of the preceding claims, in which the low-Tg hydrocarbon resin has an aliphatic proton content measured by NMR (standardized method) of at least 90%, preferably of at least 95%.

11. Composition according to any one of the preceding claims, in which the low-Tg hydrocarbon resin has an aromatic proton content of less than 5%.

12. Composition according to any one of the preceding claims, in which the low-Tg hydrocarbon resin is a predominantly styrene, and hydrogenated, resin.

13. Composition according to any one of the preceding claims, in which the reinforcing filler comprises a silica as the predominant reinforcing filler.

14. Composition according to any one of the preceding claims, in which the content of silica is within a range extending from 50 to 160 phr.

15. Pneumatic or non-pneumatic tyre comprising a composition according to any one of the preceding claims.
